(19) Europäisches Patentamt / European Patent Office / Office européen des brevets

(11) **EP 3 723 303 A1**

(12) # EUROPEAN PATENT APPLICATION

(43) Date of publication:
**14.10.2020 Bulletin 2020/42**

(51) Int Cl.:
**H04B 10/66** *(2013.01)* **H04B 10/69** *(2013.01)*

(21) Application number: **19167935.6**

(22) Date of filing: **08.04.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Nokia Solutions and Networks Oy 02610 Espoo (FI)**<br><br>(72) Inventor: **Le, Thai Son 02610 ESPOO (FI)**<br><br>(74) Representative: **DREISS Patentanwälte PartG mbB**<br>**Friedrichstraße 6**<br>**70174 Stuttgart (DE)** |

(54) **DIRECT-DETECTION OPTICAL DATA RECEIVER AND METHOD OF OPERATING A DIRECT-DETECTION OPTICAL DATA RECEIVER**

(57) A digital signal processor for use in a direct-detection optical data receiver. The digital signal processor including a first electronic unit for estimating signal-to-signal-beat interference in a received first sequence of digital intensity measurements of an optical signal combining an optical carrier and an optical data-modulated signal in a same optical wavelength channel. The digital signal processor includes a second electronic unit to modify the first sequence by clipping some of the intensity measurements thereof in response said some of the intensity measurements having magnitudes above a threshold.

**EP 3 723 303 A1**

**Description**

**Field of the invention**

The disclosure relates to optical data communications, direct-detection optical data receivers and to methods of operating such optical data receivers.

**Background**

Due to the growth of cloud services, data center-interconnect (DCI) and metro networks have become increasingly important network segments. Typically, DCI and metro networks use optical fiber to transport data.

One approach for optical fiber data transport, which can provide high data rates desired for DCI applications, is based on the direct-detection (DD) of optical signals, which are intensity-modulated to carry data. However, the maximum optical reach of such DD optical communication systems is typically limited, e.g., by fiber group velocity dispersion (GVD).

Further approaches for optical data transport over optical fiber, at the high data rates desired for DCI, are based on phase-modulation of optical signals. These approaches may both increase data rates and overcome some optical reach limits caused by dispersion. Some approaches to phase-modulation use coherent optical receivers, which would be costly for DCI applications. Recently, other approaches to the use of phase-modulation for the optical transport of data have proposed the use of direct-detection of such phase-modulated optical signals. Direct detection typically does not use optical mixers in the optical data receiver to extract phase information carried by the optical carrier. The phase information is extracted from the electrical intensity measurements of a photodiode or phototransistor. Such direct-detection can recover data carried of in-phase and quadrature-phase components of the optical data-modulated signal without interference of said signal with a locally generated optical carrier. Thus, direct-detection can enable a simpler optical data receiver than in a coherent optical data receiver.

**Summary**

Some embodiments provide a direct-detection, optical data receiver, methods of operating such receivers, and/or methods and systems of communicating data using such receivers. Some such embodiments may better reduce signal-to-signal beat interference (SSBI) contributions to the optical intensity measurements used to recover the phase-modulated data stream. The optical intensity measurements are of an optical signal combining an optical carrier and a data-modulated optical signal in the same optical wavelength channel. Some such embodiments may be useful in optical data receivers whose digital signal processors (DSPs) iteratively remove SSBI in the digital signals corresponding to the optical intensity measurements. Some such embodiments enable a reduction of the power of the optical carrier and can enable the use of more wavelength channels in a wavelength-division-multiplexed system, e.g., at optical reaches obtained via in-line optical amplification.

First embodiments include a digital signal processor for use in a direct-detection optical data receiver. The digital signal processor includes a first electronic unit for estimating signal-to-signal-beat interference contributions to a received first sequence of digital intensity measurements of an optical signal. The optical signal combines an optical carrier and an optical data-modulated signal in a same optical wavelength channel. The digital signal processor includes a second electronic unit to modify the first sequence by clipping some of the intensity measurements thereof in response said some of the intensity measurements having magnitudes above a threshold.

In any of the first embodiments, the apparatus may further include an optical data receiver. The optical data receiver includes a photodetector, an analog-to-digital converter and the digital signal processor. The analog-to-digital converter is connected to generate the digital intensity measurements in response to an electrical signal measuring the optical signal from the photodetector.

In any of the first embodiments, said digital signal processor may be configured to filter at least one of said first sequence and said modified first sequence to remove frequency components of one sign therefrom.

In any of the first embodiments, said digital signal processor may be configured to scale by a factor magnitudes of said digital intensity measurements of at least one of said first sequence and said modified first sequence.

In any of the first embodiments, the apparatus may include a remote optical data transmitter configured to transmit the optical signal to an optical fiber.

In any of the first embodiments, the digital signal processor may include a third electronic unit for recovering data carried by said optical data-modulated signal from compensated values of the digital intensity measurements of the first sequence. Each of the compensated values is a corresponding one of the digital intensity measurements of the first sequence minus one of the estimated optical signal-to-signal-beat interference contributions. In some such embodiments, the digital signal processor may be configured to estimate the optical signal-to-signal-beat interference contributions in said intensity measurements of the first sequence based on a third sequence of intensity measurements obtained by clipping some of the compensated ones of the intensity measurements in response said some of the compensated ones of the intensity measurements having magnitudes above a threshold.

In any of the first embodiments in which the apparatus includes the optical data receiver as described above, the apparatus may further include another optical data receiver having a second photodetector, a second analog-to-digital converter, and a second digital signal processor. The second analog-to-digital converter is configured to produce another sequence of intensity measurements from in response to the second photodetector receiving an optical signal combining an optical carrier and an optical data-modulated signal together in a second wavelength-channel. The second digital signal processor has an electronic unit to estimate optical signal-to-signal-beat interference contributions to said intensity measurements of the another sequence based on the intensity measurements thereof. The electronic unit of the second digital signal processor is configured to perform said estimating based by magnitude-clipping some of the intensity measurements of the another sequence in response said some of the intensity measurements of the another sequence having magnitudes above a threshold. Some such embodiments may further include a remote optical data transmitter configured to transmit said optical signals.

According to further exemplary embodiments, said clipping procedure may comprise soft clipping, wherein a signal amplitude of the signal to be clipped is limited to a predetermined non-constant clipping level, depending on the specific signal amplitude.

In contrast to hard clipping, where all values of a signal, which are higher than a predetermined value, are set to this predetermined value (resulting in a transfer function that is non-differentiable at said predetermined value, i.e. comprises an edge), soft clipping denotes a type of distortion effect, where the amplitude of a signal is saturated along a smooth curve, rather than an abrupt shape as obtained by hard-clipping.

In some first embodiments, said clipping may be responsive to ratios of magnitudes of the some of the intensity measurements of the first sequence to an average magnitude of the intensity measurements of the first sequence being 7dB or more. According to other exemplary embodiments, the clipping may be responsive to the ratios having other values.

According to some first embodiments, the clipping may be response to a value of the threshold determined via a training session in which the optical data receiver receives an optical signal carrying data stream. As an example, the value of the threshold may be adjusted to lower a bit error rate in recovery of a data stream from the received optical signal during the training session.

According to some first embodiments, the apparatus may include a filter to filter said intensity measurements to remove frequency components thereof of one sign and/or to remove a DC component therefrom. According to exemplary embodiments, said filter may be a SSB filter such as an finite impulse response, FIR, filter, e.g., a digital FIR filter.

In some of the first embodiments, said apparatus may include a wavelength division multiplexing, WDM, system configured to transmit said optical signals via an optical fiber. In some such embodiments, the optical signals may be transmitted by single multi-wavelength optical transmitter.

Various embodiments enable monitoring of an optical data-modulated signal and/or recovery of some data carried thereby through self-coherent detection of the optical signal at the optical receiver.

Second embodiments provide a method of operating a direct-detection optical receiver. The method includes making a temporal first sequence of digital intensity measurements of an optical signal combining an optical carrier and an optical data-modulated signal in a same wavelength channel. The method also includes digitally estimating optical signal-to-signal-beat interference contributions to said intensity measurements based on the intensity measurements. The digitally estimating is based a second sequence of intensity measurements obtained from the first sequence by magnitude-clipping some of the intensity measurements thereof in response said some of the intensity measurements having magnitudes above a threshold.

In any of the second embodiments, the method may further include recovering data carried by said optical data-modulated signal from compensated values of the intensity measurements. Each of the compensated values corresponds to one of the digital intensity measurements minus one of the estimated signal-to-signal-beat interference contributions.

In any of the second embodiments, the method may further include digitally estimating the optical signal-to-signal-beat interference contributions in said intensity measurements of the first sequence based on a third sequence of intensity measurements obtained by clipping some of the compensated ones of the intensity measurements in response said some of the compensated ones of the intensity measurements having magnitudes above a threshold.

In any of the second embodiments, the method may further include receiving the optical signal combining an optical carrier and an optical data-modulated signal from a remote optical data transmitter.

In any of the second embodiments, the method may further includes making another sequence of digital intensity measurements of a second optical signal combining a second optical carrier and a second optical data-modulated signal in a same second wavelength channel. In such an embodiment, the method also includes another digitally estimating optical signal-to-signal-beat interference contributions to said intensity measurements of the another sequence based on the intensity measurements thereof. The another digitally estimating is based on a sequence of intensity measurements obtained from the another sequence by magnitude-clipping some of the intensity measurements thereof in response said some of the intensity measurements of the another sequence having magnitudes above a threshold.

In any of the second embodiments, the method may further include filtering said first set of intensity measurements to remove frequencies of one sign and the optical carrier therefrom.

**Brief description of the figures**

Further features, aspects and advantages of the illustrative embodiments are explained in the following detailed description with reference to the drawings in which:

Figure 1 is a block diagram schematically illustrating an optical fiber communication system according to exemplary embodiments;

Figure 2 is a block diagram schematically illustrating an optical data transmitter for providing a phase-modulated optical signal, e.g., in the system of Figure 1;

Figure 3 is a block diagram schematically illustrating a direct-detection type of optical data receiver, e.g., in the system of Figure 1;

Figure 4 schematically illustrates optical wavelength channels of a WDM signal according to the WDM optical fiber communication system of Figure 1;

Figure 5A is a flow-chart schematically illustrating aspects of a method for estimating the time varying SSBI(t) contribution to optical intensity measurements of a received optical signal, e.g., for use in a DSP of the single wavelength-channel, optical data receivers of Figures 1 and 3;

Figure 5B is a flow-chart schematically illustrating aspects of a method for recovering a data stream carried by a received optical signal based on the estimated SSBI(t) of Figure 5A, e.g., in a DSP of the single wavelength-channel, optical data receivers of Figures 1 and 3;

Figure 6 is a flow chart schematically illustrating iteratively estimating SSBI according to preferred embodiments, e.g., in the optical data receiver of Figure 3 based on the methods of Figures 5A - 5B;

Figures 7, 8, and 10 schematically illustrate example spectra for signals at various steps of the method of Figure 5A;

Figure 9 illustrates an example of an optical intensity measurement varying in time after subtraction of a direct current and how clipping in the method of Figure 5A may change said intensity measurement in time;

Figure 11 schematically illustrates a possible clipping procedure for the method of Figure 5A on the example of an optical intensity measurement of Figure 9,

Figure 12 illustrates estimates of some output signal-to-noise ratios (SNRs) when SSBI reduction is performed according an example of the methods of Figures 5A - 5B and when SSBI reduction does not use clipping as in those methods;

Figure 13 schematically illustrates estimated output SNRs for an optical data receiver using examples of the methods of Figures 5A-5B and for a conventional Kramers-Kronig and for a coherent optical data receiver for a carrier-to-signal power ratio (CSPR) of 4dB;

Figure 14 schematically illustrates estimates of the gain in the SNR over a conventional Kramers-Kronig optical data receiver of an optical data receiver using the methods of Figures 5A-5B and a signal-to-signal beat interference (SSBI) algorithm with 10 iterations for a CSPR of 4dB;

Figure 15 schematically depicts an output signal to noise ratio according to further exemplary embodiments,

Figure 16 schematically depicts a gain according to further exemplary embodiments,

Figure 17A to 17C are block diagrams schematically illustrating optical data transmitters according to various exemplary embodiments, e.g., for use in the optical fiber, data communication system of Figure 1.

Herein, quantities such as optical signal os(t), wavelength-channel-a optical carrier oc_a(t), wavelength-channel "a", optical data-modulated signal od_a(t), single-sideband signal SSB(t), and signal-to-signal-beat interference SSBI(t) may vary in time "t" and may have respective Fourier transforms os (f), oc_a(f), od_a(f), SSB(f), and SSBI(f) that vary in frequency "f". Herein, for various parameters, time "t" and/or frequency "f" labels may be dropped where such labels would be obvious to a person of ordinary skill in the relevant arts.

In various embodiments, optical data receivers use direct detection to detect a received optical signal. This implies that the received optical signal is not mixed with light of a local optical oscillator to detect optical phase modulations thereon. Also, the received optical signal combines an optical carrier with an optical data-modulated signal so that self-coherence of the received optical signal can be used to extract data therefrom as further described below.

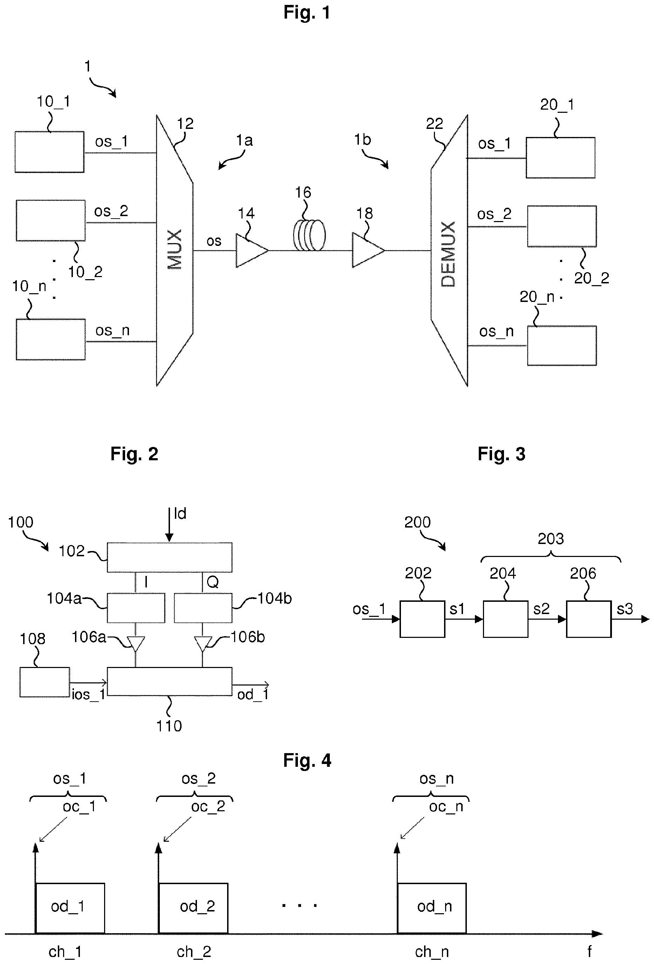

Figure 1 schematically illustrates an optical fiber communication system 1 according to exemplary embodiments. The optical fiber communication system 1 communicates "n" many optical signals os_1, os_2, ..., os_n between an optical data transmitter 1a and an optical data receiver 1b via an optical fiber 16. Here, each optical signal os_1 - os_n is in a different optical wavelength channel, and n is an integer equal to or greater than 1 so that the system 1 may or may not be an optical WDM system.

The optical fiber 16 may be, e.g., a standard single-mode optical fiber or may not be a single mode fiber in short reach applications. In the optical fiber communication system 1, the optical fiber 16 may have a short reach, e.g., a length of greater than 10 or 20 kilometers, or may. e.g., have a length of 80 to 100 kilometers. For example, such a system may provide data communications between spatially-localized data centers and may or may not have one or more wideband (i.e., WDM) optical amplifiers 14, 18.

In Figure 1, the optical fiber communication system 1 is illustrated as a wavelength division multiplexing (WDM) system for transmitting "n" respective optical signals os_1, os_2, ..., os_n on "n" corresponding wavelength channels ch_1, ch_2, ..., ch_n (Fig. 4) with n > 1. The optical signals os_1 - os_n are spread over a range of frequency (f) to form "n" different optical wavelength channels ch_1, ch_2, ..., ch_n as schematically shown in Fig 3.

In this WDM embodiment, each of the optical signals os_1, os_2, ..., os_n is provided by a respective single-wavelength-channel, optical data transmitter 10_1, 10_1, ..., 10n. Also, each of the optical signals os_1 - os_n is received by a corresponding single-wavelength channel, optical data receiver 20_1, 20_2, ..., 20_n via the optical fiber 16 (Fig. 1).

Each optical signal os_1 - os_n, provided by the optical data transmitters 10_1, 10_2, ..., 10_n, includes a combination of an optical carrier oc_1, oc_2, ..., oc_n and a co-propagating optical data-modulated signal od_1, od_2, ..., od_n in the same wavelength channel ch_1, ch_2, .., ch_n as schematically illustrated in Figure 4. The co-propagating optical carrier oc_1 - oc_n enables an efficient self-coherent, direct-detection of the optical data-modulated signals od_1 - od_n in the corresponding "n" optical data receivers 20_1, 20_2, ..., 20_n of the optical fiber communication system 1. In particular, the co-propagating optical carriers oc_1 - oc_n enable extraction of phase-modulated data as is discussed in more detail below.

Fig. 4 shows the optical data-modulated signals od_1 - od_n as being asymmetrically located with respect to the corresponding optical carriers oc_1 - oc_n. That is, the optical data-modulated signals od_1, od_2, ..., od_n are single sideband (SSB) signals. Such SSB signals may enable a narrower channel packing in WDM embodiments.

In Figure 1, the "n" optical signals os_1, os_2, ..., os_n are wavelength-multiplexed into a WDM optical signal os by an optical wavelength multiplexer 12 of the optical data transmitter 1a. The diagram of Fig. 4 corresponds to frequency "f" spectrum of the example WDM signal os. The WDM signal os is optical wavelength-demultiplexed by an optical wavelength demultiplexer 22 of the optical data receiver 1b.

Optionally, the WDM signal os may be amplified by a first optical amplifier 14, which may be an in-line optical amplifier and/or may be co-located with the "n" single wavelength-channel, optical data transmitters 10_1, ..., 10_n and the optical wavelength multiplexer 12 to form the optical data transmitter 1a, as shown in the optical fiber communication system 1 in Figure 1. Similarly, the WDM signal may be amplified by one or more other optical amplifiers 18, which may be an in-line optical amplifier(s) and/or may be co-located with the optical wavelength demultiplexer 22 and the "n" single wavelength-channel, optical data receivers 20_1, 20_2, .., 20_n to form the WDM optical data receiver 1b, as shown in the optical fiber communication system 1 in Figure 1.

In Figure 1, the one or more optional optical amplifiers 14, 18 may be conventional erbium doped fiber amplifiers ("EDFA") and/or other conventional types of optical amplifier, e.g., Raman amplifiers

Whereas Figure 1 schematically illustrates the optical fiber communication system 1 as supporting wavelength division multiplexing, other embodiments are also intended to include an optical fiber communication system based on a single optical wavelength-channel, i.e., the channel ch_1 of Figure 4. Such embodiments have a single-wavelength, optical data transmitter 10_a of Figure 1, which is optically connected to a corresponding single-wavelength, optical data receiver 20_1 of Figure 1 via the optical fiber 16. Since this embodiment has a single wavelength-channel, the optical wavelength multiplexer 10 and the optical wavelength demultiplexer 20 of Figure 1 may not, e.g., be used or needed in some such embodiments.

Figure 2 schematically depicts a single wavelength-channel, optical data transmitter 100, e.g., for generating optical signal os_1 of optical wavelength-channel ch_1 of Figures 1 and 4. While the optical data transmitter 100 is configured for the specific optical wavelength-channel ch_1, the optical transmitters 10_2 - 10_n for different ones of the optical wavelength-channels ch_2 - ch_n may have structure similar to the structure of the optical data transmitter 100 of Fig. 2.

Typically, the optical data transmitter 100 is configured to output both the data-modulated optical signal od_1 and the optical carrier oc_1 in the same wavelength channel thereby forming the optical signal os_1. Herein, an optical carrier oc_1 is a signal that is substantially unmodulated temporally. But, the optical carrier oc_1 may be, in some embodiments, modulated at a much lower rate than the optical data-modulated signal od_1, e.g., the optical carrier oc_1 may carry a very low rate modulation to transmit conventional monitoring information. The optical data transmitter 100 outputs a data-modulated optical signal od_1 according to a phase modulation scheme such as quadrature phase-shift keying (QPSK) or quadrature amplitude modulation (QAM). The optical data transmitter 100 transmits the optical carrier oc_1, with an about constant amplitude and regular phase, in a same wavelength range as the optical data-modulated signal od_1 transmitted therefrom. In particular, the optical data transmitter 100 receives an input digital data stream Id and phase-modulates said input digital data stream Id onto an input optical signal ios_1 for an optical wavelength-channel ch_1, i.e., an unmodulated optical carrier, to produce the optical data-modulated signal od_1. The input optical signal ios_1 is produced by a light source 108, e.g., a laser, which may, e.g., also produce the corresponding optical carrier oc_1 in the same wavelength-channel ch_1. As explained below, the constant or almost constant form of the optical carrier oc_1 is used to recover data from optical intensity measurements in the corresponding optical data receiver 20_1 of Figure 1.

The optical data transmitter 100 may include a digital processing block 102, first and second electronic drivers 104a and 104b, and an electro-optical data modulator 110, and may optionally include electrical amplifiers 106a and 106b.

The digital processing block 102 maps the input digital data stream Id into a stream of digital symbols for transmission via the data-modulated optical signal od_1 of the corresponding optical signal os_1. In the data-modulated optical signal od_1, each symbol may be, e.g., defined by a pair of in-phase I and quadrature phase Q values of the optical data-modulated signal od_1. The digital processing block 102 may also perform other types of conventional processing, e.g., adding redundancy for forward error correction to the input digital data stream prior to optical modulation thereof.

The digital processing block 102 outputs digital I and Q values to electrical driver circuits 104a and 104b in response to receipt of segments of the input digital data stream. From said digital values, the driver circuits 104a and 104b generate analog electrical signals for operating the electro-optical data modulator 110 to phase-modulate the input optical carrier ios_1 to carry the corresponding streams of (I, Q) values, which define the optical symbols.

Typically, the driver circuits 104a, 104b include digital-to-analog converters (DACs), which transform received digital values to analog electrical values appropriate for operating the electro-optical data modulator 110 to produce the desired I and Q modulations. In some embodiments, the analog signals output by the DACs 104a, 104b may be electrically amplified by electrical amplifiers 106a, 106b before the control electrodes of the electro-optical data modulator 110. Said electrical amplifiers 106a, 106b may not be present in other embodiments. The driver circuits 104a, 104b, and the optional electrical amplifiers 106a, 106b may be conventional electrical devices that would be known to persons of ordinary skill in the relevant arts.

The electro-optical modulator 110 performs I and Q modulation of the input optical signal ios_1 from optical source 108 to produce a corresponding phase-modulated optical data-modulated signal od_1 of Figure 4. For example, the electro-optical modulator 110 may be a conventional nested Mach-Zehnder optical modulator for I and Q modulation.

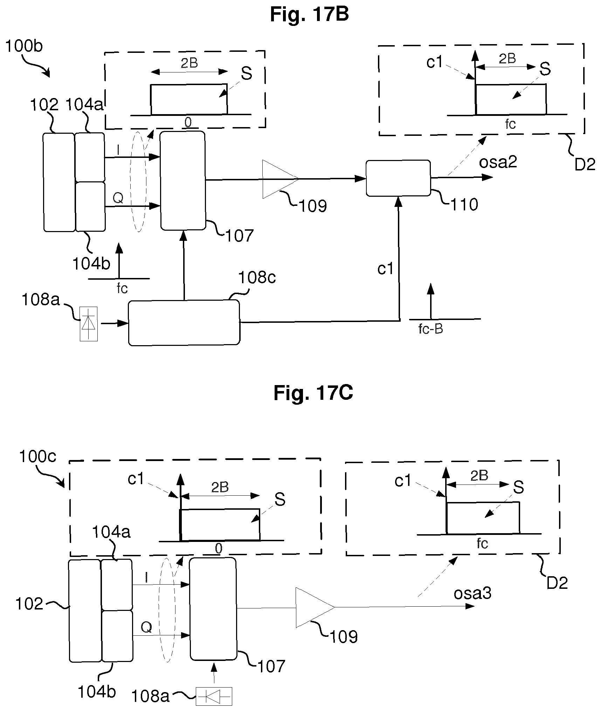

As already stated, the optical data transmitter 100 also produces an optical carrier oc_1, i.e., a "co-propagating carrier", at a wavelength in the wavelength band of the corresponding optical data-modulated optical signal od_1. According to various embodiments, said optical carrier signal oc_1 may be provided by said I/Q modulator 110 or said optical source 108, as explained in more detail below, e.g., in Fig. 17C. The combination of the optical carrier oc_1 and the optical data-modulated signal od_1 of the optical wavelength-channel ch_1 forms the optical signal os_1 output by the optical data transmitter 100, e.g., for transmission by the optical fiber 16 of Figure 1.

According to further exemplary embodiments, the further optical data transmitters 10_1, ..., 10_n of Fig. 1 may comprise a similar structure to the optical data transmitter 100, illustrated by Fig. 2, for producing other ones of the optical signals os_1 - os_n of Figures 1 and 4.

Various embodiments may enable the optical data transmitter 100 to use less precise and less costly DACs in the electrical driver circuits 104a, 104b.

Fig. 3 schematically illustrates a single wavelength-channel, optical data receiver 200 for receiving the optical signal os_1, of the wavelength channel ch_1 of Figures 1 and 4. While the optical data receiver 200 is configured for the specific optical wavelength-channel ch_1, the optical receivers 20_1 - 20-n of Fig. 1 for different ones of the wavelength channels ch_1 - ch_n may comprise a structure similar to the optical data receiver 200 of Fig. 3.

The optical data receiver 200 includes a photodetector 202, e.g., a single photodiode or photo-sensitive transistor optionally having an electrical amplifier at the output thereof, and an electrical signal processing device 203. Said optical data receiver 200 converts, in said photodetector 202, a received optical signal os_1, e.g., as in Figure 1, into an electrical signal s1 measuring the received optical intensity and processes said electrical signal s1, in the signal processing device 203, to recover transmitted data therefrom. That is, the data is recovered from a received optical signal os_1 that combines an optical carrier oc_1 and an optical data-modulated signal od_1, e.g., phase-modulated, in the same wavelength channel ch_1.

Said signal processing device 203 includes an analog-to-digital converter (ADC) 204 and a digital signal processor (DSP) 206.

The ADC 204 converts said electrical input signal s1, received from the photodetector 202, into a stream of digital electrical signals s2, i.e., optical intensity measurements of the received optical carrier os_1. The stream of digital electrical signals s2 is a temporal series of signals with a plurality of discrete signal values. The number of discrete signal values ("samples") per time corresponds with a sample rate or conversion rate of the ADC 204. The sampling rate is typically equal to or greater than the symbol rate on the optical data-modulated signal od_1. The possible number of different amplitude values of said digital electrical signal s2 corresponds to a resolution of said ADC 204.

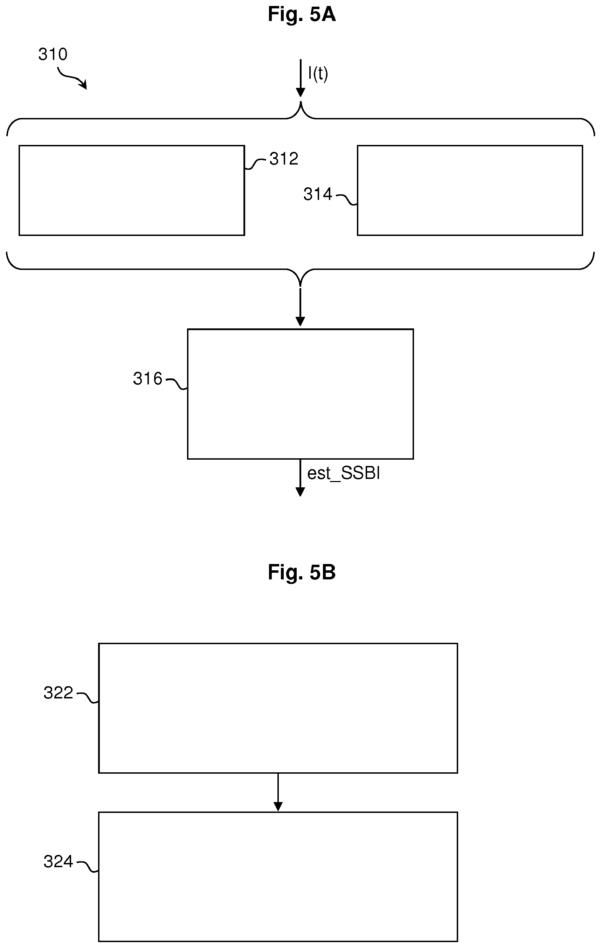

The DSP 206 typically recovers a data stream s3 carried by the optical data-modulated signal od_1, received by the optical data receiver 200. The DSP 206 may perform methods of Figures 5 - 6 to recover data stream s3 from the stream of digital signals s2, which digitized electrical signal s1 measuring the optical intensity of the optical signal os_1 at the photodetector 204. The digital signal s2 is a temporal stream of optical intensity measurements of the received combination of the optical carrier oc_1 and the optical data-modulated signal od_1 in the same optical wavelength-channel oc_1. The DSP 206 recovers the data stream s3 via direct-detection of the optical signal os_1, which is a combination of the optical carrier oc_1 and the optical data-modulated signal od_1, the combination being transmitted by a remote optical data transmitter, e.g., the optical data transmitter 100 of Figure 2.

The recovery of the data carried by the optical data-modulated signal od_1 is based on intensity measurements I(t) at sampling times "t" by the photodetector 202. Since the photodetector 204 receives both the optical carrier oc_1 and the optical data-modulated signal od_1 for the optical channel ch_1, the intensity measurements are defined by:

```
I(t) = [oc_1(t) + od_1(t)]*[oc_1(t) + od_1(t)]
     (equation 1)
```

$$= |oc\_1(t)|^2 + [od\_1(t)*oc\_1(t) + od\_1(t)*oc\_1(t)] + |od\_1(t)|^2.$$

In the above form for I(t):

- the first term is a DC offset if the optical carrier oc_1 has an approximately constant amplitude,
- the second term is linear in the optical data-modulated signal od_1, and
- the third term is the signal-signal beat interference (SSBI).

The optical data receiver 200 may remove the DC offset before or after processing of the intensity measurement s1 by the ADC 204. After removal of the DC offset, DSP 206 does digital processing to reduce the contribution of SSBI, i.e., $|od\_1(t)|^2$. For example, the DSP 206 may perform the method of Figure 5 to reduce the contribution of the SSBI.

In eq. 1, each of the three terms of the second form for the measured intensity, I(t), have intermediate or baseband frequencies due to the square-law detection, i.e., optical intensity detection, in the photodetector 202. Thus, the measured intensity, I(t), varies at lower frequencies than optical frequencies and may be processed at digital speeds of the DSP 206.

The DSP 206 obtains an estimate of the SSBI from the signal s2 after analog or digital subtraction of the DC offset, i.e., after subtraction of the first term of the second form of eq. (1), i.e., $|oc\_1(t)|^2$. For example, an analog DC-blocking filter, i.e., such as a capacitor, may subtract the DC offset. After removal or subtraction of the DC offset, the second term of the second form of I(t), in eq. (1), typically has a much larger magnitude than the third term, because the magnitude of the optical carrier, i.e., $|oc\_1|$, is much larger than the magnitude of the optical data-modulated signal, i.e., $|od\_1|$. Thus, the square of the second term of last form of I(t), in eq. (1), provides an estimate of the SSBI up to a rescaling to remove the dependency on a square of the optical carrier, i.e., $|oc\_1|^2$. For this reason, various methods herein may obtain estimates of the SSBI by rescaling an estimate of the DC-subtracted form of s2 by $1/|oc\_1|$ and then, squaring the result or by squaring an estimate of the DC-subtracted form of s2 and then, dividing by $|oc\_1|^{-2}$.

There are known techniques to improve estimates of the SSBI iteratively. For example, "Comparison of digital signal-signal beat interference compensation techniques in direct-detection subcarrier modulation Systems" by Zhe Li et al, Optics Express, Vol. 24, Issue 25, pp. 29176-29189 (2016), describes some such techniques and is incorporated herein, in its entirety, by reference. These techniques rely on the optical carrier oc_1 having a much larger magnitude than the optical data-modulated signal od_1. Some such iterative techniques remove errors in above-mentioned estimate of the SSBI, wherein the errors are higher order in the number of powers of $|od\_1|/|oc\_1|$.

The inventor realized that techniques for estimating the SSBI are susceptible to large errors from temporal components of the DC-offset-adjusted, optical intensity measurements I(t) of large magnitude, e.g., large temporal components. Such large amplitude temporal components can cause errors, which could be magnified in estimates of the SSBI, in part, because the methods for obtaining such estimates square the DC offset adjusted, optical intensity measurements. That is, the squaring operation can amplify errors in the estimates of the SSBI due to errors in the large temporal components of the optical intensity measurements with respect to errors in the estimates of the SSBI due to errors in the smaller temporal components of the optical intensity measurements. In other words, techniques for estimating SSBI may suffer from large errors when the carrier to signal power ratio (CSPR) is small, i.e. when the temporal component of the signal is relatively large in comparison with the DC part.

Various embodiments include clipping the magnitudes of digital optical intensity measurements I(t), after DC-subtraction. That is, after DC-offset removal, temporal components of measured optical intensities, whose magnitudes are above a selected threshold, are magnitude-clipped prior to their use in estimates of the SSBI. While such clipping may also introduce errors into the estimate of SSBI, the inventor believes that these later errors are often less than errors likely introduced when a large magnitude temporal portion of the measured optical intensity is used to determine the SSBI. Thus, such clipping of the DC-subtracted optical intensity measurements I(t) can improve the convergence and/or accuracy of one or more resulting estimates of the SSBI.

Figure 5A illustrates an example method for digitally processing the DC-subtracted, measured optical intensity I(t) in the optical data receiver 200 of Fig. 3. The method describes digital processing, in the DSP 206, of the measured optical intensity I(t) of the received optical signal os_1 of Figures 1 and 3. In particular, the digital processing is performed on the electrical digital signal s2 of Figure 3, after subtraction of the DC offset, i.e., the processing is on a temporal sequence of optical intensity measurements.

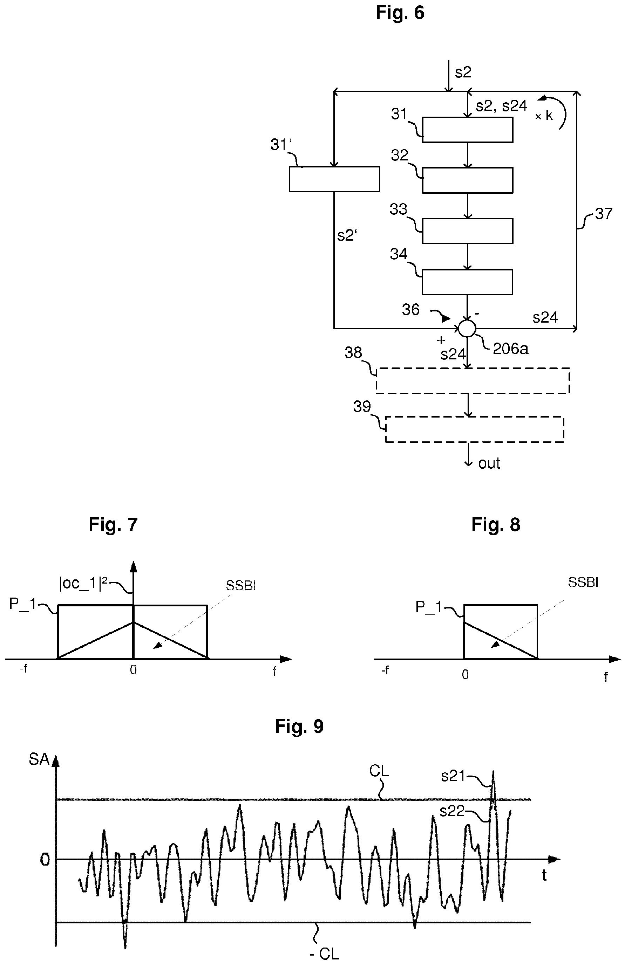

Various operations of the method of Figure 5 are also schematically illustrated by Figures 7 - 11, as described below. In different embodiments, the order of some of the steps may be varied.

The method involves a digital processing step on the signal s2 by the DSP 206, wherein an estimate est_SBBI of the SSBI is obtained from the stream of optical intensity measurements s1 (step 310)). The step 310 has several sub-steps as described below. The various sub-steps are schematically illustrated by Figures 7 - 11.

Figure 7 schematically illustrates the measured optical intensity I(t) for the optical channel ch_1 in frequency "f". The measured optical intensity I(t) has a zero frequency component, i.e., f= 0, corresponding to the Fourier transform of the intensity measurements, i.e., the component due to $|oc\_1|^2$, of the optical carrier oc_1. The measured optical intensity I(t) also has a low and/or intermediate frequency portion P_1 corresponding to the second and third terms of the second form of the measured optical intensity I(t) in eq. (1). Thus, this frequency component has a component proportional to loc_1| |od_1| and a smaller SSBI, i.e., $|od\_1|^2$, which is indicated as SSBI in Figure 7.

In some embodiments, the method may include filtering the stream of measured optical intensities to extract a single sideband (SSB) thereof (step 312). For example, such extraction may be performed via digital filtering in the DSP 206. Such filtering would produce from the received sequence of optical intensity measurements, with a frequency spectrum of Figure 7, signals with a frequency spectrum of Figure 8. Since optical intensity measurements are real, the SSB restriction to positive frequencies or alternatively to negative frequencies does not lose information about the signal s2. The filtering of step 312 may be performed, e.g., via a digital finite impulse response (FIR) filter in the DSP 206.

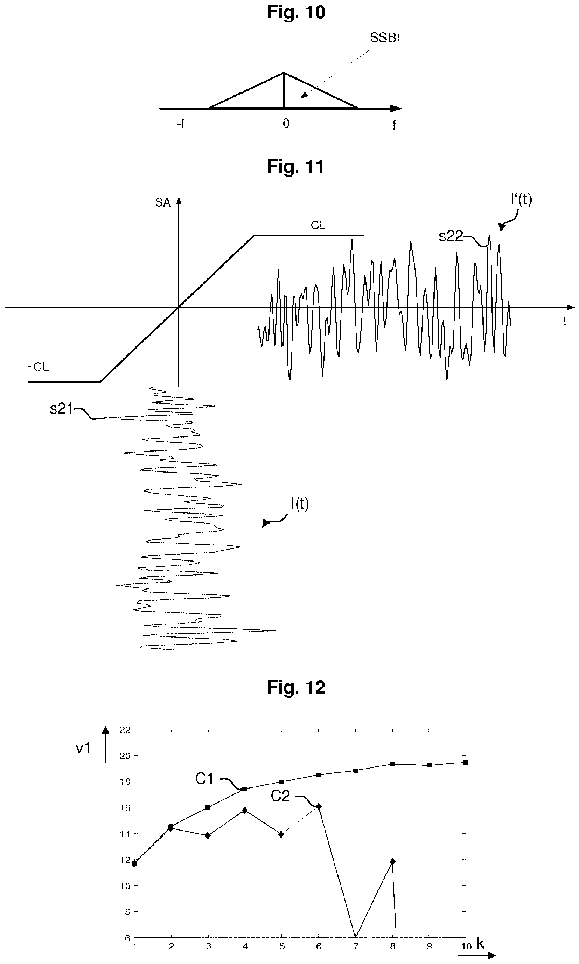

Referring again to Figure 5A, the method includes clipping the magnitude of the temporal measured intensity signal I(t) such that magnitudes of the signals thereof are not larger than a selected threshold (step 314). Figures 9 and 11 schematically illustrate the magnitude clipping of step 312 for an example of a temporal optical intensity measurement I(t) before and after an example of such clipping. Figure 9 illustrates the selected thresholds +CL and -CL and a temporal peak s21 of the optical intensity measure I(t), which is replaced by a peak s22 by said magnitude clipping. Figure 11 illustrates the original optical intensity measurement I(t), along the bottom of the vertical axis, and the clipped intensity measurements I'(t) the horizontal axis as well as the clipping thresholds CL and -CL. The peak S21 and corresponding clipped peak s22 are also indicated in Figure 11. Exemplarily, Figure 11 depicts hard clipping according to preferred embodiments. Alternatively, according to further preferred embodiments, soft clipping may also be used.

In Figure 5A, said clipping step 314 may be performed before or after filtering removes one sideband of the DC offset-subtracted optical intensity measurements I(t).

Referring again to Figure 5A, the method includes digitally scaling and squaring the clipped, DC offset-subtracted, optical intensity measurements I(t) to obtain an estimate est_SSBI of the SSBI (step 316). In some embodiments, the scaling operation of step 316 may be performed before squaring operation. In other embodiments, the scaling operation of step 316 may be performed after the squaring operation.

The scaling of the step 316 is typically used to enable the result of step 314 to be used to obtain estimate(s) of the SSBI. While the DC offset-subtracted, optical intensity measurements I(t) is typically approximately proportional to the magnitude of the optical carrier, i.e., |oc_1|, the SSBI is not proportional to |oc_1| or a positive integer power thereof, i.e., if |oc_1| >> |oc_1|. If the DC offset-subtracted, optical intensity measurements I(t) is rescaled by the DC-offset of I(t), the dependence of such rescaled DC offset-subtracted, optical intensity measurements I(t) on the magnitude of optical carrier oc_a is approximately removed. Thus, such rescaled quantities can be used to obtain a temporal stream of values of approximate magnitude $|od\_1|^2$, i.e., for use in obtaining the SSBI.

At the step 316, the appropriate amount of scaling may also be determined, e.g., by a training session in which the optical receiver 300 adjusts the amount of scaling to approximately optimally recover a known training data sequence. According to further preferred embodiments, a scaling factor for the abovementioned scaling process can be known at the receiver or can be determined, respectively, e.g. depending on the DC carrier power and a carrier-to-signal power ratio (CSPR). As an example, the scaling factor alpha may be determined as follows: alpha=(CSPR+1)/(CSPR* received DC carrier power), i.e. alpha=(CSPR+1)/(CSPR* averaged value of I(t)), i.e. alpha=(CSPR+1)/(CSPR*mean{I(t)}). In other words, if the DC carrier power and the CSPR are known, then the scaling factor is also known or can efficiently be determined. According to further preferred embodiments, said scaling factor may be determined by employing an optimization process. As shown above, alpha = 1/(received DC carrier power) is a good estimation of the scaling factor as (CSPR+1)/CSPR ~ 1. The scaling factor alpha can be then optimized for the best performance.

According to further preferred embodiments, said scaling factor may be estimated through a training process using a training sequence.

As already mentioned the clipping procedure may introduce errors in the estimate of the optical data-modulated signal od_1(t). But, the inventor believes that such a clipping-caused errors may be smaller and/or may be efficiently controlled by conventional processing to obtain the SSBI. Moreover, the inventor believes that such clipping may reduce the likelihood of an instability, which may arise in conventional SSBI reduction schemes.

In various embodiments, said clipping of step 316 may be a hard clipping for which peaks and valleys in the DC offset-subtracted, optical intensity measurements are clipped so that the magnitude of said signal does not exceed a selected threshold CL, -CL. As an example, the clipping may cause the magnitude of the DC offset-subtracted, measured intensity I(t) over a temporal average thereof to be not more than about 7 dB.

In some examples, the clipping may be adjusted to improve or approximately optimize the recovery of data from the DC-subtracted, measured intensity after clipping. As previously mentioned, such embodiments may use performance of data recovery in a training period to set the level of clipping and/or the amount of scaling in above step 3.

In alternate examples, said clipping procedure of the step 316 may comprise soft clipping (not shown), wherein a signal amplitude of the signal s21 to be clipped is limited to a predetermined non-constant clipping level, depending on the specific signal amplitude.

Soft clipping is a clipping technique well-known by a person of ordinary skill in the relevant arts. While hard clipping means all the values of the signal, which is higher than a predetermined value (e.g., CL of Fig. 9), are set to this predetermined value, wherein the signal is saturated along abrupt shape curve, soft clipping is a type of distortion effect where the amplitude of a signal is saturated along a smooth curve, rather than the abrupt shape of hard-clipping.

In embodiments including the SSB filtering step 312, the method further may also include estimating the SSBI for positive and negative frequencies from the estimates obtained from the step 316, i.e., for frequencies of one sign. Since the SSBI(t) is a real quantity, the spectrum of the SSBI for one sign of the frequency "f" determines the spectrum thereof for the other sign of the frequency by reflection in frequency, i.e. SSBI(-f) = SSBI(f), as illustrated qualitatively in Figure 10.

With respect to the method of Figure 5A, the estimates of the SSBI may be used for various reasons. For example, the uses may include monitoring of the optical wavelength-channel and/or recovery of data carried by the optical data-modulated signal od_a transmitted therein.

Figure 5B illustrates a method of recovering data carried by the optical data-modulated signal od_a based on the method of Figure 5A.

In Figure 5B, the method includes subtracting the estimated SSBI from the stream of optical intensity measurements I(t) of the received optical signal os_a to obtain a sequence of improved optical intensity measurements from which an estimate of the temporal SSBI(t) contribution is removed (step 322). The temporal estimates of the SSBI(t) of step 322 are obtained via the method illustrated in Figure 5A. Since the SSBI(t) varies in time, the subtraction typically involves subtracting from each temporal one of the optical intensity measurements I(t), the SSBI (t) value at the same time.

The method also includes recovering the data stream carried by the received optical data-modulated optical signal od_1 from the sequence of improved optical intensity measurements obtained in the step 322 (step 324). The recovery step 324 may perform via conventional techniques for recovery of the data stream via direct detection in which the optical data-modulated signal is phase-modulated onto an optical signal. The step 324 may involve substeps related to equalization, e.g., to compensate or remove effects of chromatic and/or polarization-induced dispersion, carrier recovery to adjust for phase drift between the optical carrier oc_1 and the co-propagated optical data-modulated signal od_1, and error correction.

According to further exemplary embodiments, the above method may be performed iteratively to obtain one or more improved estimates of the time varying SSBI(t). Such methods may obtain one or more improved estimates for the data-modulated optical signal oa_d(t) from earlier estimate(s) thereof. That is, the one or more improved estimates are based on earlier estimate(s) of the SSBI based on the DC-subtracted, optical intensity measurements. The improved estimate of the optical data-modulated signal od_a(t) is used to obtain an improved estimate of the SSBI(t), which then may be subtracted from an earlier estimate of the optical data-modulated signal od_a(t) to obtain a more improved estimate of the data-modulated signal od_a(t), e.g., for use in various applications such as data recovery from the received optical signal s_a(t).

Figure 6 is a flow chart schematically illustrating iteratively estimating SSBI according to further preferred embodiments, wherein said estimating may e.g. be performed by DSP 206 (Fig. 2), preferably in accordance with the following equation:

$$\mathrm{SSBI}_{k+1} = |\mathbf{C}(\mathbf{L}(I(t) - \mathrm{SSBI}_k))|^2 * alpha \quad \text{(equation 2),}$$

wherein L ( ) represents a single side band filter, wherein C() represents a clipping operation, wherein I(t) represents temporal measured intensity signal (also cf. reference sign s2 of Fig. 3), wherein $|.|^2$ represents a squared absolute value, wherein alpha represents said scaling factor, wherein k (integer >= 0) represents an iteration counter, and wherein $SSBI_k$ represents the SSBI as obtained by the k-th iteration. As an example $SSBI_0 = 0$.

Overall, according to further embodiments, the estimation of the SSBI in the iteration number k+1 depends on the previous $SSBI_k$.

As an example, for a first iteration, k=0, equation 2 reads : $SSBI_1 = |C(L(I(t) - SSBI_0))|^2 * alpha = |C(L(I(t)))|^2 * alpha$. According to further preferred embodiments, this may be obtained according to the steps 31, 32, 33, 34 of Fig. 6, wherein step 31 takes as an input the temporal measured intensity signal I(t) (also cf. digital signal s2) and represents a SSB filter operation (preferably by means of an SSB filter that removes e.g. negative frequencies (f < 0) and the optical carrier (Fig. 7.), wherein step 32 represents a clipping procedure, e.g. according to Fig. 9, 11, wherein step 33 represents the squaring step ($|.|^2$), and wherein step 34 represents the scaling step, i.e. multiplication with scaling factor alpha. In other words, for the first iteration, i.e. k=0, after step 31, it is obtained $L(I(t))$, after step 32, it is obtained $C(L(I(t)))$, after step 33 it is obtained $|C(L(I(t)))|^2$, and after step 34 it is obtained $SSBI_1 = |C(L(I(t)))|^2 * alpha$.

After this, the result $SSBI_1$ of the first iteration is combined with a temporarily stored copy s2' of the digital signal s2 (cf. block 31' of Fig. 6), whereby the combined signal s24 is obtained. For said combining, preferably an adder 206 may be used, which is configured to subtract the term $SSBI_1$ provided by block 34 from the stored copy s2'.

Preferably, according to further embodiments, the steps 31, 32, 33, 34 are repeated for a predetermined number k of iterations, e.g. between 1 and 20 times, preferably between 1 and 10, cf. the arrows k, 37 of Fig. 6. For each of these iterations, the combined signal s24 of a preceding iteration is used as the input signal s2, so that undesired SSBI is iteratively removed from the signal s2.

As a further example, the estimation of the SSBI in the second iteration is:

$$SSBI_2 = |C(L(I(t) - SSBI_1))|^2 * alpha$$

According to further exemplary embodiments, after said predetermined number k of iterations, the combined signal s24 may be used as an output signal of the process, which may also be denoted as "iterative SSBI cancellation with clipping", and an optional step 38 of dispersion compensation and/or symbol detection and forward error correction (FEC) 39 may be performed on the combined signal s24, which e.g. comprises the output signal s3 of Fig. 3. According to further aspects, the scaling factor alpha may depend on the DC carrier power and the average carrier to signal power ratio CSPR, which may be known beforehand or can be estimated by the receiver. In further preferred embodiments, this value is known as it does not change during the operation of the system.

Figure 12 schematically depicts on a vertical axis v1 an output signal to noise ratio in dB over a number k of iterations (also cf. the arrow k of Fig. 5) according to further exemplary embodiments. Curve C1 corresponds with an application of the method according to exemplary embodiments, i.e. iterative SSBI cancellation with clipping (cf. step 312 of Fig. 5 and steps 31, 32, 33, 34 of Fig. 6) and relates to the output signal to noise ratio of the combined signal s24 as obtained at an output of the adder 206a after k many iterations (Fig. 6). It can be seen that with increasing number k of iterations, the output signal to noise ratio C1 may increase. By contrast, curve C2 represents the output signal to noise ratio of a conventional SSBI cancellation procedure without clipping, similar to the approach explained in Z. Li, et al. "SSBI Mitigation and Kramers-Kronig Scheme in Single-Sideband Direct-Detection Transmission with Receiver-based Electronic Dispersion Compensation." J. Lightwave Technol. 35 (2017) [reference 1]. As an example, for the comparison according to Fig. 12, a signal-to-channel-noise ratio is fixed at 25 dB, and the CSPR is 4 dB. It is noted that with clipping (curve C1) the performance of SSBI cancellation is much better and also the SNR is increased with the number k of iterations. This is not the case where clipping is not applied, cf. curve C2. Overall, the scheme according to exemplary embodiments performs significantly better than a previously reported scheme without clipping, on which curve C2 is based.

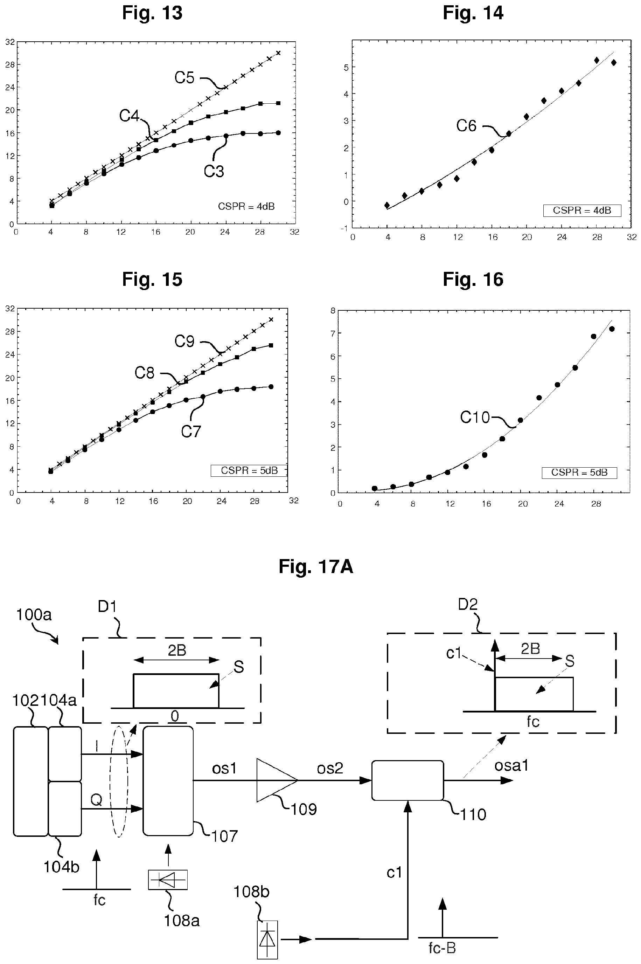

Figure 13 schematically depicts an output signal-to-noise-ratio in dB (vertical axis) over a signal-to-channel-noise ratio in dB (horizontal axis) according to further exemplary embodiments. Curve C3 depicts results obtained by applying a conventional Kramers-Kronig scheme, as e.g. explained in [reference 1], curve C4 depicts results obtained by application of a method according to exemplary embodiments, i.e. iterative SSBI cancellation with clipping (cf. step 312 of Fig. 5A, and steps 31, 32, 33, 34 of Fig. 6), and curve C5 depicts results as (theoretically) obtainable by an ideal coherent detector.

Figure 14, cf. curve C6, schematically depicts a gain of the method according to exemplary embodiments (with exemplary k=10 iterations and a CSPR of 4 dB) over the Kramers-Kronig (KK) scheme (e.g., according to [reference 1]) in dB (vertical axis) over a signal-to-channel-noise ratio in dB (horizontal axis) according to further exemplary embodiments.

Figure 15 schematically depicts an output signal-to-noise-ratio in dB (vertical axis) over a signal-to-channel-noise ratio in dB (horizontal axis) according to further exemplary embodiments, similar to Fig. 13. Curve C7 depicts results obtained by applying a conventional KK scheme, as e.g. explained in [reference 1], curve C8 depicts results obtained by application of a method according to exemplary embodiments, i.e. iterative SSBI cancellation with clipping (cf. step 312 of Fig. 5A, steps 31 to 34 of Fig. 6, k=10 iterations), and curve C9 depicts results as (theoretically) obtainable by an ideal coherent detector. In contrast to Fig. 13, presently, for the depiction of Fig. 15, a CSPR of 5 dB is assumed. From Fig. 15 it can be seen, that the approach according to exemplary embodiments, cf. curve C8, is superior to the conventional KK approach, cf. curve C7.

Figure 16, cf. curve C10, schematically depicts a gain of the method according to exemplary embodiments (with exemplary k=10 iterations and a CSPR of 5 dB) over the Kramers-Kronig (KK) scheme (e.g., according to [reference 1]) in dB (vertical axis) over a signal-to-channel-noise ratio in dB (horizontal axis) according to further exemplary embodiments.

From the above explained Figures 12 to 16, it can be seen that the approach according to some exemplary embodiments (cf. curves C4, C6, C8, C10) significantly outperforms the state of the art (cf. curves C3, C7). According to some exemplary embodiments, the obtained gain can be as high as 7 dB when the channel noise is low, which may correspond with a practical case of short-reach transmission. Figures 13 and 14 also show that the proposed scheme according to some exemplary embodiments can work effectively with a comparatively low CSPR value of 4 dB.

Figure 17A to 17C each schematically depict a simplified block diagram of an optical transmitter according to further exemplary embodiments. The transmitters exemplarily depicted by Fig. 17A to 17C are configured to provide an optical signal osa1, osa2, osa3 (similar to signal os_1, cf. Fig. 1) for a WDM wavelength channel, wherein an optical carrier is assigned to said optical signal, cf. e.g. Fig. 4, reference signs ch_1, oc_1.

As an example, according to exemplary embodiments, one or more of the optical transmitters 10_1, 10_2, ..., 10_n of Fig. 1 may comprise a structure similar or identical to any of the configurations 100a, 100b, 100c of Fig. 17A to 17C.

Figure 17A depicts a transmitter 100a which uses two laser sources 108a, 108b for generating an optical output signal osa1 with an associated optical carrier c1. Signal processing block 102 provides two signals that are converted by respective DACs 104a, 104b to analog signals I, Q a spectrum S of which, having bandwidth 2B, is exemplarily depicted in the detail D1 of Fig. 17A. Based on these signals I, Q and a laser signal (with frequency fc) of the first laser source 108a, I/Q modulator 107 generates an I/Q-modulated optical signal os1, which is optionally amplified by an optional optical amplifier 109 (e.g., an EDFA) to obtain an amplified signal os2. As an example, the optical signal os1 (and/or the amplified version os2 thereof) may correspond to a WDM wavelength channel ch_1, cf. Fig. 4, also cf. the spectrum S in the spectral view of detail D2 of Fig. 17A. Optical coupler 110 (Fig. 17A) combines the amplified signal os2 with an optical carrier signal c1 (with frequency fc-B, wherein B corresponds with a bandwidth of the I/Q-modulated signal os1) provided by the second laser source 108b (Fig. 17A). As a result, the optical spectrum S with associated (co-propagating) optical carrier c1 is obtained.

Figure 17B depicts a transmitter 100b which is similar to transmitter 100a of Fig. 17A in that it provides an optical output signal osa2 with an associated optical carrier c1, cf. the spectrum S depicted in detail D2. However, transmitter 100b has only one laser source 108a (e.g. operating at 1550 nanometer (nm)), and uses a comb generator 108c ("frequency comb") to provide respective input signals fc, c1 to the I/Q-modulator 107 and the coupler 110.

Figure 17C depicts a transmitter 100c which is similar to transmitter 100b of Fig. 17B in that it provides an optical output signal osa3 with an associated optical carrier c1, cf. the spectrum S depicted in detail D2. However, instead of using a comb generator 108c (Fig. 17B), transmitter 100c of Fig. 17C provides the carrier signal c1 by means of digital signal processing, cf. block 102. In other words, in contrast to the transmitters 100a, 100b of Fig. 17A, 17B, the transmitter 100c of Fig. 17C provides the carrier signal c1 already in the digital domain ("digital carrier"), together with the I/Q-signal components, so that one single laser source 108a is sufficient for providing the optical output signal osa3 at an optical carrier frequency of e.g. 1550 nm, together with an associated (co-propagating) optical carrier c1.

To summarize, any of the transmitters 100a, 100b, 100c explained above with reference to Fig. 17A, 17B, 17C (as well as transmitter 100 according to Fig. 2) may be used for the optical receiver 200 according to the embodiments and/or for the WDM system 1 according to the embodiments. According to further embodiments, transmitter 100c of Fig. 17C may be preferred over variants 100a, 100b of Fig. 17A, 17B as only one single laser source 108a is required and a comb generator is not required. However, if a high-power digital carrier c1 (Fig. 17C) is generated according to further exemplary embodiments, a requirement for resolution of the digital-to-analog converter (DAC) may be higher in comparison to the case of an optically generated carrier (Fig. 17A, Fig. 17B). This is because the resolution of the DAC is shared between the digital carrier c1 and the information-bearing signal (cf. spectrum S of Fig. 17C). I.e., the higher the power of the digital carrier c1 is, the higher a requirement for the resolution of the DACs 104a, 104b may be. As a result, according to further exemplary embodiments, it may be desirable to use a comparatively small CSPR in systems with digital carrier c1, if possible.

According to further exemplary embodiments, a power of the (optical) carrier (cf. e.g. reference sign oc_1 of Fig. 4, c1 of Fig. 17C) in a self-coherent detection system may be characterized by the abovementioned carrier-to-signal power ratio CSPR. In conventional systems, cf. e.g. [reference 1] above, a typical value of CSPR is about 10 dB. This means that the number of WDM channels in WDM transmissions using said conventional system is limited to around 20 WDM channels due to a comparatively high value of CSPR and the limited output power of the optical amplifier 14 (Fig. 1, e.g., an EDFA). In other words, if the CSPR can be reduced by 3 dB, the number of WDM channels that may be provided for the WDM system 1 (Fig. 1) will be doubled. According to further exemplary embodiments, this can efficiently be achieved by employing the (preferably iterative) reduction of SSBI using clipping 312 (Fig. 5A, 6). As a result, when employing the principle according to the embodiments, SSBI may be reduced in the optical receiver 200, which in turn allows to operate the WDM system 1 (Fig. 1) (and/or single transmitters thereof) with a comparatively low CSPR of e.g. 4 dB or 5 dB - as compared to e.g. 10 dB as used within conventional approaches. Due to the lower CSPR, a larger portion of the EDFA amplification budget may be employed for (additional) WDM channels, so that according to further exemplary embodiments, the number of WDM channels of the system 1 can be increased.

Further exemplary embodiments relate to optical communication equipment and more precisely but not exclusively, to optical transport systems employing direct detection self-coherent receivers 200, 20a, 20b, ..., 20n and compatible transmitters 100, 100a, 100b, 100c.

Further exemplary embodiments relate to a method of reducing or cancelling the SSBI in self-coherent detection receivers and/or systems using a comparatively small CSPR, e.g. 4 dB or 5 dB, instead of 10 dB as implemented in prior art. Further exemplary embodiments may also be denoted as "iterative SSBI cancellation with clipping". In comparison with the conventional Kramers-Kronig (KK) scheme ([reference 1]), the method according to exemplary embodiments shows up to 5 dB performance improvement when the CSPR is kept as low as 4 dB.

Therefore, further exemplary embodiments enable a massive WDM transmission with self-coherent direct detection, e.g. using receivers 200 of the self-coherent direct detection type, where the CSPR can be kept low (e.g., lower than 10 dB). According to further exemplary embodiments, the number of WDM channels may be increased to e.g. 80, instead of a typical value of 20 (when the CSPR is 10 dB, according to conventional approaches).

Moreover, further exemplary embodiments enable an effective implementation of self-coherent direct detection (receivers 200) with digital carrier c1 (Fig. 17C). This is because a CSPR as low as 4 dB or 5 dB according to further exemplary embodiments may significantly relax a requirement of the DACs' 104a, 104b (Fig. 17C) resolution.

As an example, according to further exemplary embodiments, with a typical resolution of 6 to 8 bits of commercially available DACs, self-coherent direct detection with a digital carrier system can be implemented effectively if the CSPR is kept low as 4 dB or 5 dB. As a result, exemplary embodiments enable both massive WDM transmission and cost-effective implementation of self-coherent transmission and/or reception systems.

Some examples of embodiments described herein may mitigate one or more problems of prior art and thus make an application of DD (direct detection) more effective. For example, some embodiments herein more effectively remove the SSBI(t) component of the optical intensity measures I(t) in an optical data receiver, e.g., elements 20_1 to 20_n of Figure 1, so that lower magnitude optical carriers, i.e., optical carriers oc_1 to oc_n of Figure 4, are usable. Due to the lower magnitude of such optical carriers, optical signals combining an optical carrier and an optical data-modulated signal in the same wavelength-channels, e.g., optical signals os_1 to os_n of Figure 4, produce a lower optical load on an optical amplifier. For that reason, wideband optical amplifiers, e.g., the optical amplifiers 14 and 18 of Figure 1, may be able to operate with more optical channels, e.g., larger values of "n" in Figure 1, so that some such embodiments, e.g., the system 1 of Figure 1, can support more parallel wavelength-channels for data.

## Claims

1. A method of operating a direct-detection optical receiver, comprising:

   making a temporal first sequence of digital intensity measurements of an optical signal combining an optical carrier and an optical data-modulated signal in a same wavelength channel; and
   digitally estimating optical signal-to-signal-beat interference contributions to said intensity measurements based on the intensity measurements; and
   wherein the digitally estimating is based a second sequence of intensity measurements obtained from the first sequence by magnitude-clipping some of the intensity measurements thereof in response said some of the intensity measurements having magnitudes above a threshold.

2. The method of claim 1, comprising recovering data carried by said optical data-modulated signal from compensated values of the intensity measurements, each of the compensated values being a corresponding one of the digital intensity measurements of the first sequence minus one of the estimated optical signal-to-signal-beat interference contributions.

3. The method of claim 1 or 2, further comprising digitally estimating the optical signal-to-signal-beat interference contributions in said intensity measurements of the first sequence based on a third sequence of intensity measurements obtained by clipping some of the compensated ones of the intensity measurements in response said some of the compensated ones of the intensity measurements having magnitudes above a threshold.

4. The method of any of the preceding claims, further comprising, receiving the optical signal combining an optical carrier and an optical data-modulated signal from a remote optical data transmitter.

5. The method of any preceding claim, further comprising:

   making another sequence of digital intensity measurements of a second optical signal combining a second optical carrier and a second optical data-modulated signal in a same second wavelength channel; and
   another digitally estimating optical signal-to-signal-beat interference contributions to said intensity measurements of the another sequence based on the intensity measurements thereof; and
   wherein the another digitally estimating is based a sequence of intensity measurements obtained from the another sequence by magnitude-clipping some of the intensity measurements thereof in response said some of the intensity measurements of the another sequence having magnitudes above a threshold.

6. Method according to at least one of the preceding claims, further comprising filtering said first set of intensity measurements to remove frequencies of one sign and the optical carrier therefrom.

7. An apparatus, comprising:

   a digital signal processor for use in a direct-detection optical data receiver, the digital signal processor including a first electronic unit for estimating signal-to-signal-beat interference contributions to a received first sequence of digital intensity measurements of an optical signal combining an optical carrier and an optical data-modulated signal in a same optical wavelength channel; and
   wherein the digital signal processor includes a second electronic unit to modify the first sequence by clipping some of the intensity measurements thereof in response said some of the intensity measurements having magnitudes above a threshold.

8. The apparatus of claim 7, further comprising an optical data receiver comprising a photodetector, an analog-to-digital converter and the digital signal processor, the analog-to-digital converter connected to generate the digital intensity measurements in response to an electrical signal measuring the optical signal from the photodetector.

9. The apparatus according to at least one of the claims 7 to 8, wherein said digital signal processor is configured to filter at least one of said first sequence and said modified first sequence to remove frequency components of one sign therefrom.

10. The apparatus according to at least one of the claims 7 to 9, wherein said digital signal processor is configured to scale by a factor magnitudes of said digital intensity measurements of at least one of said first sequence and said modified first sequence.

11. The apparatus according to at least one of claims 7 - 10, comprising an optical data transmitter configured to transmit the optical signal to an optical fiber.

12. The apparatus according to at least one of claims 7 - 11, wherein the digital signal processor comprises a third electronic unit for recovering data carried by said optical data-modulated signal from compensated values of the digital intensity measurements of the first sequence, each of the compensated values being a corresponding one of the digital intensity measurements of the first sequence minus one of the estimated optical signal-to-signal-beat interference contributions.

13. The apparatus according to claim 12, wherein the digital signal processor is configured to estimate the optical signal-to-signal-beat interference contributions in said intensity measurements of the first sequence based on a third sequence of intensity measurements obtained by clipping some of the compensated ones of the intensity measurements in response said some of the compensated ones of the intensity measurements having magnitudes above a threshold.

14. The apparatus any of claims 8 - 10 and 12 - 13, further comprising another optical data receiver having a second photodetector, a second analog-to-digital converter, and a second digital signal processer, the second analog-to-digital converter to produce another sequence of intensity measurements from in response to the second photodetector receiving an optical signal combining an optical carrier and an optical data-modulated signal together in a second wavelength-channel; and

wherein the second digital signal processor has an electronic unit to estimate optical signal-to-signal-beat interference contributions to said intensity measurements of the another sequence based on the intensity measurements thereof; and

wherein the electronic unit of the second digital signal processor is configured to perform said estimating based by magnitude-clipping some of the intensity measurements of the another sequence in response said some of the intensity measurements of the another sequence having magnitudes above a threshold.

15. The apparatus of claim 14, further comprising a remote optical data transmitter configured to transmit said optical signals.

## Fig. 1

## Fig. 2

## Fig. 3

## Fig. 4

**Fig. 5A**

310

I(t)

312

314

est_SSBI

316

**Fig. 5B**

322

324

## Fig. 6

## Fig. 7

## Fig. 8

## Fig. 9

## Fig. 10

## Fig. 11

## Fig. 12

## Fig. 13

## Fig. 14

## Fig. 15

## Fig. 16

## Fig. 17A

## Fig. 17B

## Fig. 17C

Europäisches
Patentamt

European
Patent Office

Office européen
des brevets

# EUROPEAN SEARCH REPORT

Application Number

EP 19 16 7935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/127049 A1 (RANDEL SEBASTIAN A [US] ET AL) 5 May 2016 (2016-05-05) | 1,2,4-9, 11,12, 14,15 | INV. H04B10/66 H04B10/69 |
| A | * figures 1, 3 * <br> * paragraphs [0027] - [0030], [0040] - [0045] * | 3,10,13 | |
| Y | ZHE LI ET AL: "SSBI Mitigation and the Kramers-Kronig Scheme in Single-Sideband Direct-Detection Transmission With Receiver-Based Electronic Dispersion Compensation", JOURNAL OF LIGHTWAVE TECHNOLOGY, vol. 35, no. 10, 15 May 2017 (2017-05-15), pages 1887-1893, XP055629364, USA ISSN: 0733-8724, DOI: 10.1109/JLT.2017.2684298 * figures 5, 9 * * section IV. EXPERIMENTAL RESULTS: "B. With Single-Stage Linearization Filter" and "D. With Iterative Linearization Filter" * | 1-15 | |
| Y | LOWERY ARTHUR JAMES ET AL: "Clipping-Enhanced Kramers-Kronig Receivers", 2019 OPTICAL FIBER COMMUNICATIONS CONFERENCE AND EXHIBITION (OFC), OSA, 3 March 2019 (2019-03-03), pages 1-3, XP033540152, [retrieved on 2019-04-22] * figure 1 * * sections "1. Introduction" and "2. KK receivers" * | 1-15 | TECHNICAL FIELDS SEARCHED (IPC) <br> H04B |

-/--

The present search report has been drawn up for all claims

| Place of search | Date of completion of the search | Examiner |
|---|---|---|
| Munich | 10 October 2019 | Lobato Polo, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 19 16 7935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 582 979 B2 (BUNGE CHRISTIAN ALEXANDER [DE]; SCHUSTER MATTHIAS [DE] ET AL.) 12 November 2013 (2013-11-12) * figures 2B, 4 * * column 5, lines 30-43 * * column 6, lines 31-43 * ----- | 1,7 | |

TECHNICAL FIELDS
SEARCHED      (IPC)

The present search report has been drawn up for all claims

| Place of search | Date of completion of the search | Examiner |
|---|---|---|
| Munich | 10 October 2019 | Lobato Polo, I |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 16 7935

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2019

| Patent document cited in search report | | Publication date | Patent family member(s) | | Publication date |
|---|---|---|---|---|---|
| US 2016127049 | A1 | 05-05-2016 | NONE | | |
| US 8582979 | B2 | 12-11-2013 | CN | 101369850 A | 18-02-2009 |
| | | | EP | 2026520 A1 | 18-02-2009 |
| | | | US | 2009067833 A1 | 12-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHE LI et al.** Comparison of digital signal-signal beat interference compensation techniques in direct-detection subcarrier modulation Systems. *Optics Express,* 2016, vol. 24 (25), 29176-29189

- **Z. LI et al.** SSBI Mitigation and Kramers-Kronig Scheme in Single-Sideband Direct-Detection Transmission with Receiver-based Electronic Dispersion Compensation. *J. Lightwave Technol.,* 2017, vol. 35